# EUROPÄISCHE PATENTSCHRIFT

(11) **EP 0 556 664 B1**
(45) Veröffentlichungstag und Bekanntmachung des Hinweises auf die Patenterteilung: **09.04.1997**
(21) Anmeldenummer: 93101805.5
(22) Anmeldetag: 05.02.1993
(51) Int. Cl.: B29C 41/46, B29C 33/02, B29C 41/18

(54) **Verfahren und Vorrichtung zum Erwärmen einer Form**
Method and apparatus for heating a mould
Procédé et dispositif de chauffage d'un moule

(30) Priorität: 13.02.1992 DE 4204171
(43) Veröffentlichungstag der Anmeldung: 25.08.1993
(73) Patentinhaber: YMOS AKTIENGESELLSCHAFT Industrieprodukte, D-63179 Obertshausen (DE)
(72) Erfinder: Steffan, Roland, Dr.-Ing.,Dipl.-Chem., W-6943 Birkenau/Odenwald (DE); Christoph, Erich M., Dipl.-Ing., W-6053 Obertshausen 2 (DE); Bartels, Hermann A.,Dipl.-Ing., W-6052 Mühlheim (DE)
(74) Vertreter: Schieferdecker, Lutz, Dipl.-Ing.

(56) Entgegenhaltungen:
- DE-A- 3 710 612
- FR-A- 2 058 530
- FR-A- 2 652 537
- US-A- 2 743 347
- US-A- 3 039 146
- US-A- 3 859 734
- US-A- 4 790 510
- US-A- 4 946 638

## Beschreibung

Die Erfindung betrifft ein Verfahren und eine Vorrichtung zum Erwärmen einer Form mit den Merkmalen der Oberbegriffe der Ansprüche 1 und 24. Insbesondere handelt es sich hier um eine Form zum Herstellen einer Kunststoffhaut aus einem Kunststoffpulver, das in die Form eingefüllt wird, dort aufgrund einer ausreichenden Temperatur der Form anschmilzt sowie ausschmilzt und zur Entnahme aus der Form abgekühlt wird, wobei die Erwärmung der Form durch Kontakt mit einem Wärmeträger erfolgt, von dem die Wärme an die Außenseite der Form übertragen wird. Während des Herstellungsprozesses wird die Form zusammen mit dem in einem Heizbehälter befindlichen Wärmeträger geschwenkt bzw. gedreht.

Der Einsatz eines Wärmeträgers zum Aufheizen der Form ist dem Aufheizen in einem elektrisch beheizten oder gasbeheizten Industrieofen (Umluftofen) hinsichtlich des thermischen Wirkungsgrades überlegen, weil dort im Interesse von wirtschaftlichen Aufheizzeiten der Formen mit relativ hohen Übertemperaturen bei der Umluft gearbeitet werden muß. Ferner treten inhomogene Temperaturverteilungen auf der Formwand infolge unterschiedlicher Strömungsgeschwindigkeiten der Luft auf, so daß auch die Temperatursteuerung schwierig ist. Optimale Verhältnisse hinsichtlich des thermischen Wirkungsgrades und der Temperaturverteilung sowie des Wärmeüberganges von dem Wärmeträger auf die Form lassen sich noch nicht erzielen.

Ein Verfahren gemäß dem Oberbegriff des Anspruchs 1 sowie die zu seiner Durchführung vorgesehene Vorrichtung gemäß dem Oberbegriff des Anspruchs 24 mit einer außerhalb des Heizbehälters vorgesehenen Heizeinrichtung für den Wärmeträger sowie mit einer zugeordneten Schwenk- bzw. Rotationseinrichtung sind aus der FR-A-2 058 530 bekannt.

Bei diesem Stand der Technik ist die Form permanent mit dem Heizbehälter verbunden, der zur Bildung einer Heizkammer die Form mantelförmig umgibt. Ferner ist ein Deckel bzw. eine Verschlußplatte vorgesehen, mit deren Hilfe die Form und gegebenenfalls der Heizbehälter verschlossen werden. Die zum Herstellen des Kunststoffteiles erforderliche Menge an Kunststoff wird vor dem Verschließen der Form etwa im mittigen Bereich des Deckels aufgebracht.

Als Wärmeträger dienen Glaskugeln mit einem Durchmesser unter 1/2 mm, die außerhalb der die Form umschließenden Heizkammer in einem Vorwärmbehälter vorgewärmt und in einem nachfolgenden Fluidisierbehälter auf die gewünschte Temperatur gebracht werden, um dann über ein Zuführrohr in die Heizkammer geleitet zu werden. Dabei wird die Heizkammer vollständig mit den erhitzten Glaskugeln gefüllt. Nach dem Aufschmelzen des Kunststoffpulvers werden die Glaskugeln aus der Heizkammer abgesaugt und in den Vorwärmbehälter zurückgeführt. Es ist vorgesehen, gegebenenfalls in entsprechender Weise nicht nur mittels erhitzter Glaskugeln das Kunststoffpulver zum Aufschmelzen zu bringen, sondern auch im Anschluß daran die an der Formwand anhaftende Kunststoffschicht mit Hilfe von gekühlten Glaskugeln zum Erstarren zu bringen, die ebenfalls durch den mantelförmigen Heizbehälter geführt werden.

Die Schwenk- bzw. Rotationseinrichtung der bekannten Vorrichtung ermöglicht Drehbewegungen der aus Heizbehälter und Form bestehenden, verschlossenen Anordnung um zwei Achsen, die rechtwinklig zueinander stehen. Das jeweilige Verschwenken bzw. Drehen der Anordnung dient dazu, das Kunststoffpulver innerhalb der Form gleichmäßig über die gesamte Formfläche zu verteilen.

Dementsprechend liegt der Erfindung die Aufgabe zugrunde, ein Verfahren und entsprechend eine Vorrichtung vorzusehen, mit deren Hilfe sich ein guter thermischer Wirkungsgrad erreichen läßt und vor allem auch eine homogene Temperaturverteilung auf der Formoberfläche erzielt wird, so daß auch thermisch empfindliche Kunststoffpulver sowie In-Mould-Coating-Lacke verarbeitbar sind.

Diese Aufgabe wird erfindungsgemäß dadurch gelöst, daß bei dem eingangs beschriebenen Verfahren ein den Wärmeträger enthaltender Heizbehälter mit einer lichten Öffnung verwendet wird, in die die Form für den Wärmeübergang eingesetzt wird, daß die Form und der Heizbehälter dicht miteinander verbunden werden und einander zugeordnete Ränder aufweisen, daß das Einsetzen der Form in die lichte Öffnung derart erfolgt, daß die Form mit ihrer Außenseite in das Innere des Heizbehälters ragt, und daß der Wärmeträger beim gemeinsamen Verschwenken bzw. Drehen durchmischt wird.

Bei dieser Verfahrensführung wird ein Heizbehälter verwendet, in dem die Form nicht ständig angeordnet ist, sondern jeweils für die Zeit des benötigten Wärmeüberganges eingesetzt wird. Dabei bildet die Form ein Verschlußelement vergleichbar einem Deckel für den Heizbehälter. In einer derartigen, dicht miteinander verbundenen Lage werden der Heizbehälter mit dem in ihm befindlichen Wärmeträger und die Form gemeinsam geschwenkt bzw. gedreht, wobei der gewünschte Wärmeübergang erfolgt. Zugleich wird der Wärmeträger durchmischt, was zu einer gleichmäßigen und insgesamt schnellen Aufheizung der Form führt.

Zudem besteht die Möglichkeit, den Wärmeinhalt des feinkörnigen Wärmeträgers durch Variation seiner Masse und / oder seiner Temperatur zu verändern und somit auf den Wärmebedarf der Form und der jeweils zu verarbeitenden Kunststoffmasse exakt einzustellen. Infolge der relativ hohen Wärmekapazität des feinkörnigen Wärmeträgers sind kompakte Anlagen realisierbar, bei denen die Wärmeverluste gering sind und mit kurzen Taktzeiten gearbeitet werden kann.

Das Durchmischen des Wärmeträgers kann auf unterschiedliche Weise erfolgen. Gemäß einer bevorzugten Ausführungsform der Erfindung wird der Heizbehälter nur teilweise mit dem Wärmeträger gefüllt. Dadurch ergibt sich bereits aufgrund der Schwerkraft eine natürliche Durchmischung beim Verschwenken bzw. Drehen von Heizbehälter und Form.

Ferner kann mindestens eine Einrichtung zum Durchmischen des Wärmeträgers vorgesehen sein, bei der es sich zum Beispiel um eine Förderschnecke oder dergleichen handelt. Aber auch ein Rüttler oder Vibrator können die Durchmischung fördern.

Als Wärmeträger dienen vorzugsweise feinkörniges Aluminiumoxid, Siliziumoxid, Silikat oder auch andere Metallpulver, Metallpulverlegierungen oder Metalloxidpulver. Auch die Verwendung von Mischungen verschiedener Wärmeträger ist möglich. Wesentlich ist, daß der Wärmeträger eine gute Schütt- bzw. Rieselfähigkeit besitzt und/oder fluidisierbar ist. Erreicht wird dies zum Beispiel mit kugelförmigen oder annähernd kugelfömigen Wärmeträgern. Die Korngröße eines bevorzugten Wärmeträgers liegt zweckmäßigerweise über 0,1 mm bzw. im Bereich von vorzugsweise 0,15 bis 0,3 mm.

Eine Schwenkung bzw. Drehung um nur eine einzige Achse hat sich als für die Zwecke der Erfindung völlig ausreichend erwiesen. Dabei ist es jedoch für einen guten Wärmeübergang und eine permanente Durchmischung des Wärmeträgers vorteilhaft, wenn der Heizbehälter zusammen mit der Form im Wechsel vorwärts und rückwärts verschwenkt bzw. gedreht wird, wobei diese Drehung bis zu 360 Grad oder mehr betragen kann.

Zweckmäßige Ausgestaltungen und Weiterbildungen des erfindungsgemäßen Verfahrens und der erfindungsgemäßen Vorrichtung gehen aus Unteransprüchen hervor.

Die Erfindung wird nachstehend anhand von Ausführungsbeispielen, die in der Zeichnung dargestellt sind, näher beschrieben. Dabei zeigen:
- Fig. 1:: eine Ansicht einer Form im Schnitt;
- Fig. 2:: eine Schnittansicht eines Heizbehälters mit einer eingesetzten Form gemäß Fig. 1;
- Fig. 3:: eine Schnittansicht des Heizbehälters mit der eingesetzten Form wie in Fig. 2, jedoch nach dem Verschwenken um 180° und mit einem an der Innenseite der Form angeordneten, ein Kunststoffpulver enthaltenden Pulverbehälter;
- Fig. 4:: eine Schnittansicht wie in Fig. 3 nach dem Verschwenken um 180°;
- Fig. 5:: eine Schnittansicht wie in Fig. 3 mit einer auf der Innenseite der Form angeschmolzenen Kunststoffschicht nach dem Lösen und Entfernen des Pulverbehälters;
- Fig. 6:: eine Schnittansicht der Form und des Heizbehälters nach dem Entfernen der Form aus der Öffnung des Heizbehälters;
- Fig. 7:: eine Schnittansicht der Form mit der ausgeschmolzenen Kunststoffschicht beim Abkühlen;
- Fig. 8:: eine Schnittansicht der fertiggestellten Kunststoffhaut;
- Fig. 9:: im Schnitt einen Heizbehälter beim Füllen mit einem temperierten Wärmeträger;
- Fig. 10:: im Schnitt den Heizbehälter beim Entleeren des Wärmeträgers und
- Fig. 11:: im Schnitt einen Heizbehälter mit einer integrierten Heizeinrichtung.

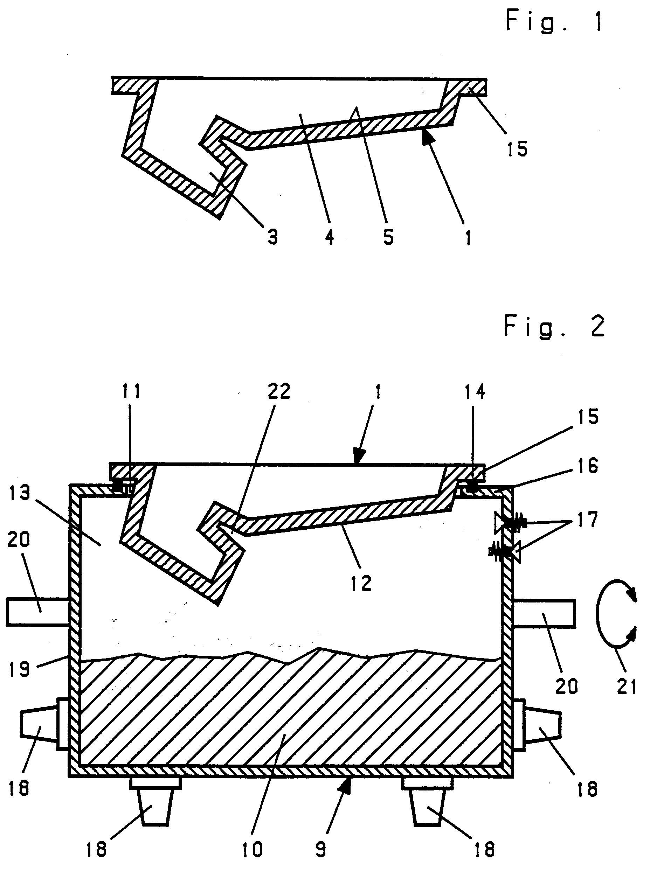

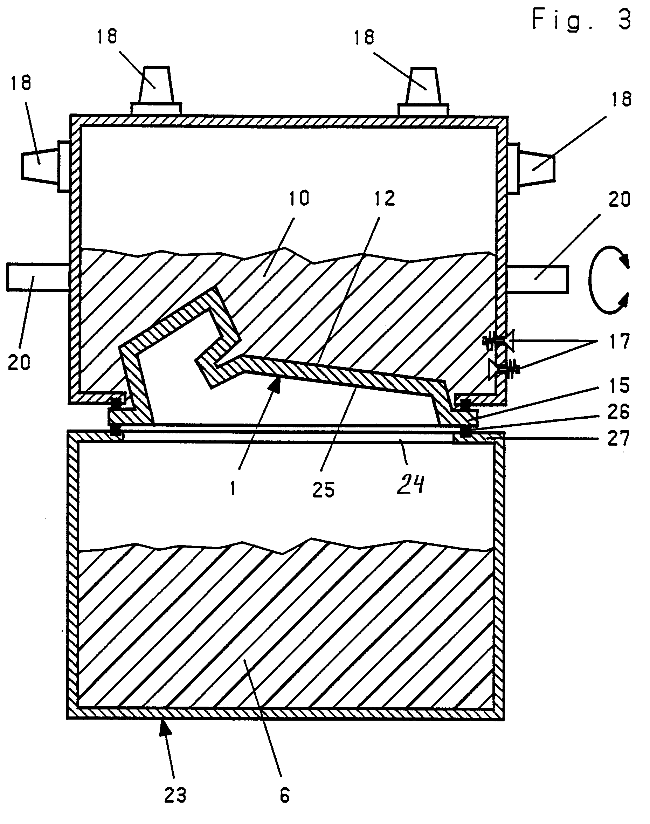

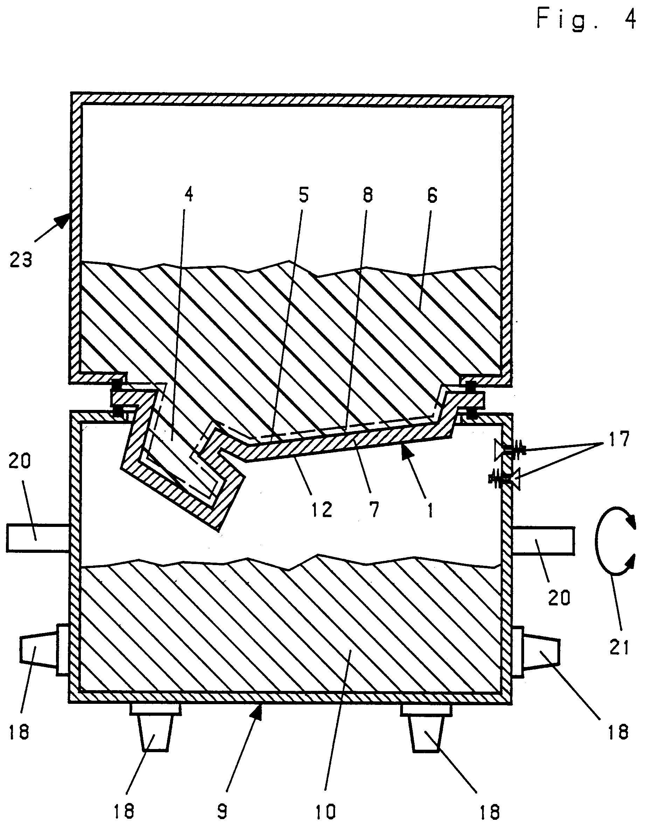

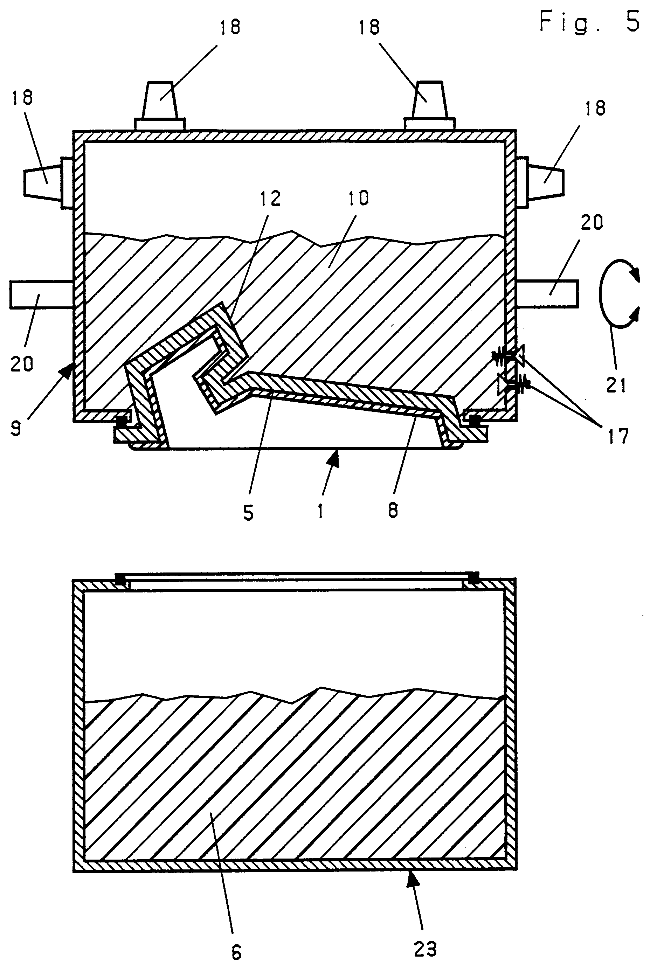

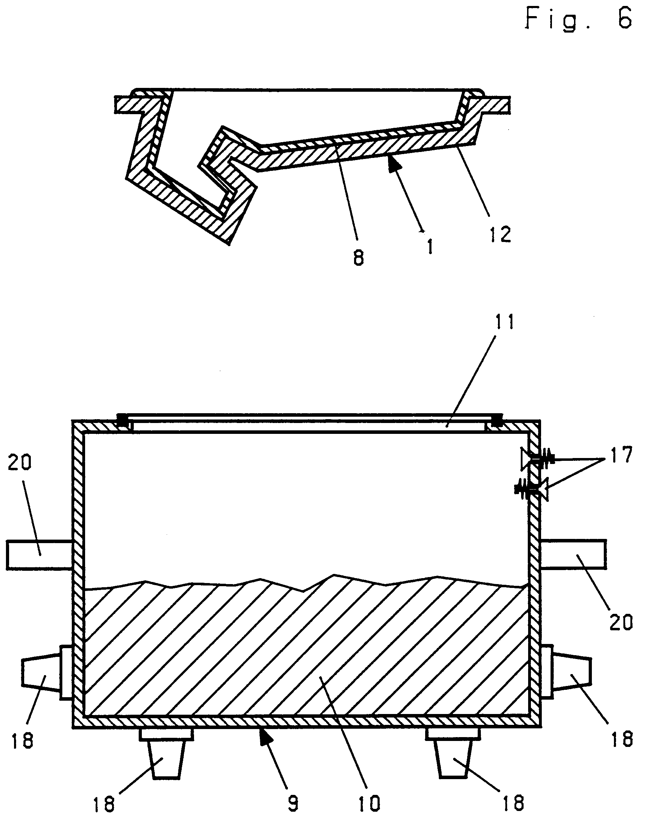

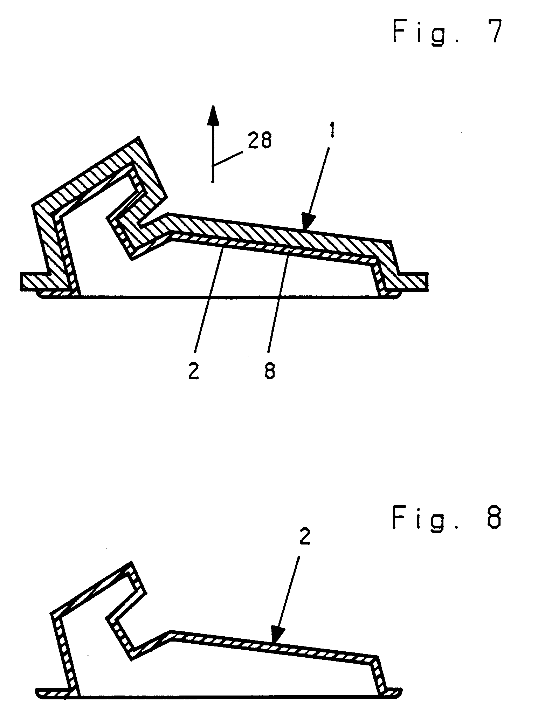

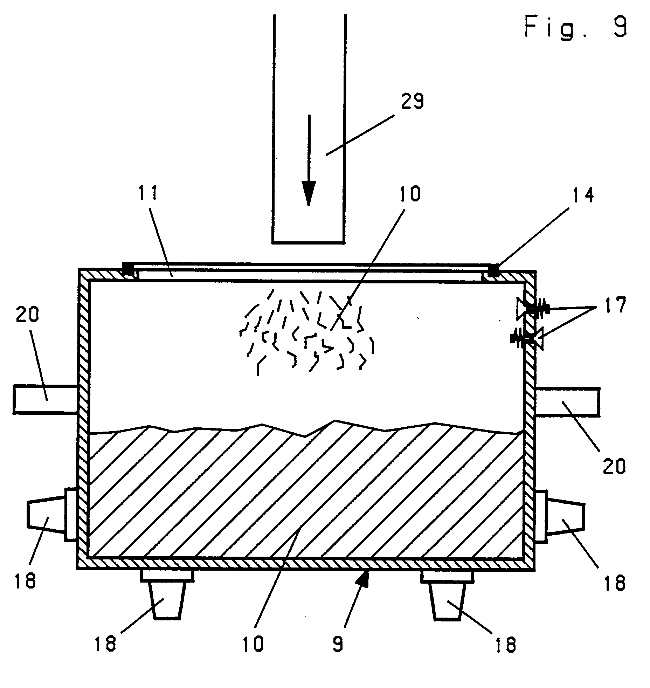

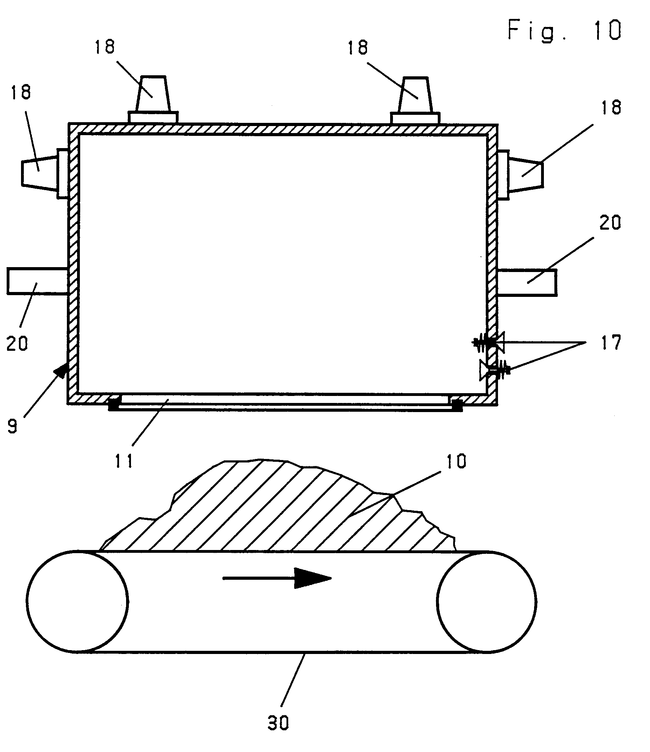

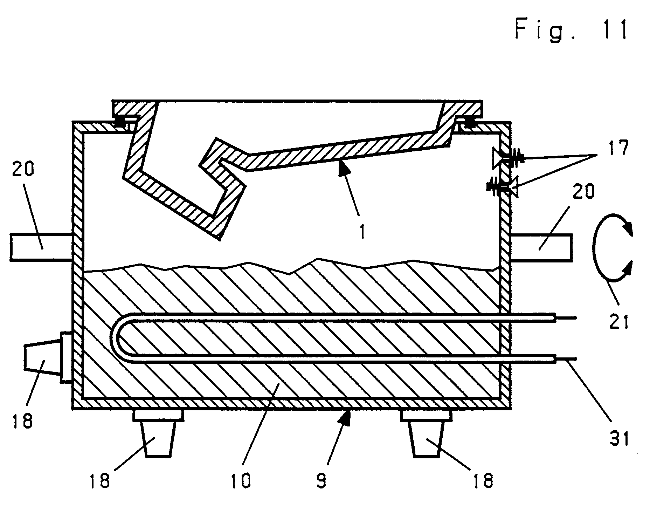

Eine in Fig. 1 im wesentlichen schematisch sowie im Schnitt dargestellte Form 1 zum Herstellen einer Kunststoffhaut 2 gemäß Fig. 8 ist z.B. schalenförmig wie das herzustellende Teil. Sie besitzt eine gleichmäßige Wandstärke und kann auch einen oder mehrere hinterschnittene Bereiche 3 aufweisen. Die Herstellung der Kunststoffhaut erfolgt bei dem in den Figuren dargestellten Ausführungsbeispiel im muldenförmigen Teil 4 der Form 1 bzw. auf deren Innenseite 5, wozu Kunststoffpulver 6 in den muldenförmigen Teil 4 gefüllt und dann innen an der auf eine ausreichende Temperatur erwärmten Wand 7 der Form 1 als dünne Kunststoffschicht 8 anschmilzt. Sobald die Kunststoffschicht 8 eine ausreichende Stärke erreicht hat, wird das Kunststoffpulver 6 wieder aus der Form 1 ausgeleert, woraufhin die Kunststoffschicht 8 durch weitere Wärmezufuhr ausschmilzt. Daraufhin wird die Form 1 mit der Kunststoffschicht 8 abgekühlt, bis die fertige Kunststoffhaut 2 der Form 1 entnommen werden kann.

Um zunächst die Form 1 zu erwärmen, ist gemäß Fig. 2 ein Heizbehälter 9 vorgesehen, in dem sich ein temperierter Wärmeträger 10 befindet. Der Heizbehälter 9 weist eine lichte Öffnung 11 auf, in der die Form 1 derart angeordnet wird, daß sie mit ihrer Außenseite 12 in das Innere 13 des Heizbehälters 9 ragt. Eine Dichtung 14 zwischen dem Rand 15 der Form 1 und dem Rand 16 des Heizbehälters 9 stellt sicher, daß der in dem Heizbehälter 9 befindliche Wärmeträger 10 beim Schwenken und Drehen von Form 1 und Heizbehälter 9 nicht aus dem Heizbehälter 9 herausfällt.

Damit die Form 1 in die lichte Öffnung 11 des Heizbehälters 9 eingesetzt und auch wieder entnommen werden kann, ohne daß dabei kleine Mengen von dem Wärmeträger austreten, weist der Heizbehälter 9 eine Einrichtung 17 auf, mit deren Hilfe ein Druckausgleich zwischen dem Inneren 13 des Heizbehälters 9 und der Umgebungsluft möglich ist. Gemäß dem in den Figuren dargestellten Ausführungsbeispiel handelt es sich bei der Einrichtung 17 zum Druckausgleich um zwei Ventile, wobei eines von innen nach außen und das andere von außen nach innen wirksam ist.

Zum Durchmischen des Wärmeträgers 10 wird der Heizbehälter 9 geschwenkt bzw. gedreht und ist hierzu schwenkbar bzw. drehbar gelagert. Dies ist anhand der Lagerzapfen 20 in Fig. 2 angedeutet. Ferner ist dem Heizbehälter 9 ein in den Figuren nicht dargestellter Antrieb zugeordnet, mit dessen Hilfe der Heizbehälter 9 zusammen mit der Form 1 vorwärts und rückwärts schwenkbar bzw. drehbar ist. Diese Bewegungen können 360° und auch mehr oder weniger betragen, wobei dies zum Teil auch von der Kontur der Form 1 abhängen kann.

Ferner kann der Heizbehälter 9 mit mindestens einer Einrichtung 18 versehen sein, mit deren Hilfe der Wärmeträger 10 durchmischt werden kann. Die Einrichtung 18 ist vorzugsweise ein Rüttler oder Vibrator, der außen auf der Behälterwand 19 des Heizbehälters 9 angeordnet ist. Die Einrichtung 18 kann aber auch eine Förderschnecke oder eine andere Einrichtung zum Durchmischen des Wärmeträgers 10 sein.

Wichtig ist, daß der schütt- und rieselfähige Wärmeträger 10 beim Schwenken und Drehen auch außen an der Form 1 befindliche, hinterschnittene Bereiche 22 erreicht, damit eine gleichmäßige Erwärmung der Form 1 erfolgt. Hierzu dient auch die Einrichtung 18 in Gestalt eines Rüttlers oder dgl.

Sobald sich die Form 1 durch Kontakt mit dem Wärmeträger 10 ausreichend erwärmt hat, wobei hierzu gemäß Fig. 3 der Wärmeträger 10 durch geeignetes Verschwenken und Drehen ganzflächig die Außenseite 12 der Form 1 bedeckt, wird ein Pulverbehälter 23 mit Kunststoffpulver 6 an der freien Seite 25 der Form 1 angeordnet. Der Pulverbehälter 23 weist eine lichte Öffnung 24 auf, mit der er auf den Bereich der muldenförmigen Innenseite 5 der Form aufgesetzt wird. Auch dies geschieht unter Verwendung einer Dichtung 26 zwischen dem Rand 15 der Form 1 und dem Rand 27 des Pulverbehälters 23.

Nunmehr wird gemäß Fig. 4 der Heizbehälter 9 zusammen mit der Form 1 und dem Pulverbehälter 23 derart geschwenkt und/oder gedreht, daß das Kunststoffpulver 6 in den muldenförmigen Teil 4 der Form 1 fällt und dort die gesamte Innenseite 5 bedeckt. Aufgrund der Temperatur der Wand 7 der Form 1 schmilzt eine dünne Kunststoffschicht 8 an. Sobald dies geschehen ist, wird der Pulverbehälter 23 mit dem Kunststoffpulver 6 wieder von der Form 1 abgenommen, wie dies in Fig. 5 dargestellt ist. Beim Zurückdrehen der Behälter in die Trennposition für den Pulverbehälter 23 fällt das noch nicht angeschmolzene Kunststoffpulver 6 in den Pulverbehälter 23 zurück, so daß sich jetzt nur noch die dünne, angeschmolzene Kunststoffschicht 8 auf der Innenseite 5 der Form 1 befindet (Fig. 5).

Sobald der Pulverbehälter 23 von der Form 1 gemäß Fig. 5 gelöst worden ist, erfolgt weiterhin ein Wärmeübergang von dem Wärmeträger 10 auf die Form 1. Dies geschieht zweckmäßigerweise auch unter Hin- und Herdrehen bzw. Schwenken des Heizbehälters 9 und der mit ihm verbundenen Form 1, bis die angeschmolzene Kunststoffschicht 8 vollständig ausgeschmolzen ist. Wenn dieser Zustand erreicht ist, wird die Form 1 mit der ausgeschmolzenen Kunststoffschicht 8' gemäß Fig. 6 von dem Heizbehälter 9 abgehoben, wenn dieser in die in Fig. 6 dargestellte Position zurückgedreht ist, damit nicht als Wärmeträger 10 dienendes Material aus dem Heizbehälter 9 herausfallen kann.

Nunmehr wird die Form 1 abgekühlt, wie dies mit Hilfe des Pfeiles 28 prinzipmäßig in Fig. 7 veranschaulicht ist, bis die Kunststoffschicht soweit erstarrt ist, daß sie als Kunststoffhaut 2 der Form 1 entnommen werden kann.

Als Wärmeträger 10 können verschiedene Werkstoffe dienen, wie bereits oben ausgeführt wurde. Hierbei ist ferner bedeutsam, daß der Wärmeinhalt des Wärmeträgers 10 durch Variation seiner Masse und/oder der Temperatur auf den Wärmebedarf der Form 1 eingestellt werden muß. Das bedeutet, daß bei einem höheren Wärmebedarf der Form 1 und einer genau definierten Temperatur des Wärmeträgers 10 die in den Heizbehälter 9 einzufüllende Menge erhöht werden muß. Den gleichen Effekt erzielt man, wenn die Temperatur bei konstant einzufüllender Menge und differierender Formmasse an die jeweilige Form 1 angepaßt wird.

Die Erwärmung des Wärmeträgers 10 kann außerhalb des Heizbehälters 9 erfolgen. In einem solchen Fall wird z.B. gemäß Fig. 9 ein bereits ausreichend temperierter Wärmeträger 10 durch ein Schüttrohr 29 in den Heizbehälter 9 gefüllt bzw. nach Durchführung der in Fig. 2 bis Fig. 6 dargestellten Verfahrensschritte auf eine Transporteinrichtung 30 gemäß Fig. 10 ausgeleert, um an anderer Stelle wieder erwärmt zu werden. Die Erwärmung des Wärmeträgers 10 erfolgt z.B. in einer separaten Drehstation, in einem Drehrohrofen oder nach der Wirbelschichttechnik.

Der Wärmeträger 10 kann aber auch innerhalb des Heizbehälters 9 in der gewünschten Weise erwärmt werden, wobei dies mit Hilfe von elektrischem Strom 31 unter Verwendung von Heizwendeln und/oder mit Hilfe von heißem Gas und/oder heißem Öl und/oder überhitztem Dampf geschehen kann.

Auch eine Kombination von außerhalb des Heizbehälters 9 und innerhalb des Heizbehälters 9 erfolgender Erwärmung des Wärmeträgers 10 kann im Einzelfall zweckmäßig sein und hängt von den besonderen Umständen des Einzelfalles ab. Dies ist vor allem dann wertvoll, wenn es wichtig ist, sofort die Wärmeverluste während des Anschmelzens oder Ausschmelzens des Kunststoffpulvers bei der Herstellung der Kunststoffhaut auszugleichen.

## Patentansprüche

1. Verfahren zum Erwärmen einer Form (1), insbesondere zum Herstellen einer Kunststoffhaut (2) aus einem Kunststoffpulver (6), das in die Form (1) eingefüllt wird, dort als Kunststoffschicht (8) anschmilzt sowie ausschmilzt und zur Entnahme aus der Form (1) abgekühlt wird, wobei die Erwärmung der Form (1) durch Kontakt mit einem Wärmeträger (10) erfolgt, von dem Wärme an die Außenseite (12) der Form (1) übertragen wird, während die Form (1) zusammen mit dem in einem Heizbehälter (9) befindlichen Wärmeträger (10) geschwenkt bzw. gedreht wird, dadurch gekennzeichnet,
daß ein den Wärmeträger (10) enthaltender Heizbehälter (9) mit einer lichten Öffnung (11) verwendet wird,
daß die Form (1) für den Wärmeübergang durch die lichte Öffnung (11) in das Innere (13) des Heizbehälters (9) eingesetzt wird,
daß die Form (1) und der Heizbehälter (9) dicht miteinander verbunden werden, wobei sie einander zugeordnete Ränder (15, 16) aufweisen,
daß das Einsetzen der Form (1) in die lichte Öffnung (11) derart erfolgt, daß die Form (1) mit ihrer Aussenseite (12) in das Innere (13) des Heizbehälters (9) ragt und
daß der Wärmeträger (10) beim gemeinsamen Verschwenken bzw. Drehen durchmischt wird.

2. Verfahren nach Anspruch 1, dadurch gekennzeichnet, daß der Heizbehälter (9) nur teilweise mit dem Wärmeträger (10) gefüllt wird.

3. Verfahren nach Anspruch 1, dadurch gekennzeichnet, daß als Wärmeträger (10) eine feinkörnige, schütt- bzw. rieselfähige und/oder fluidisierbare Substanz verwendet wird.

4. Verfahren nach Anspruch 1 und einem/oder mehreren der vorhergehenden Unteransprüche, dadurch gekenzeichnet, daß als Wärmeträger (10) ein feinkörniges Aluminiumoxid verwendet wird.

5. Verfahren nach Anspruch 1 und einem/oder mehreren der vorhergehenden Unteransprüche, dadurch gekennzeichnet, daß als Wärmeträger (10) ein feinkörniges Siliziumoxid verwendet wird.

6. Verfahren nach Anspruch 1 und einem/oder mehreren der vorhergehenden Unteransprüche, dadurch gekennzeichnet, daß Silikat als Wärmeträger (10) verwendet wird.

7. Verfahren nach Anspruch 1 und einem/oder mehreren der vorhergehenden Unteransprüche, dadurch gekennzeichnet, daß als Wärmeträger (10) eine Substanz mit einer Korngröße über 0,1 mm, vorzugsweise von 0,15 bis 0,3 mm verwendet wird.

8. Verfahren nach Anspruch 1 und einem/oder mehreren der vorhergehenden Unteransprüche, dadurch gekennzeichnet, daß als Wärmeträger (10) ein Metallpulver oder eine Metallpulverlegierung oder ein Metalloxidpulver verwendet wird.

9. Verfahren nach Anspruch 1 und einem/oder mehreren der vorhergehenden Unteransprüche, dadurch gekennzeichnet, daß als Wärmeträger (10) eine Mischung von mindestens zwei verschiedenen, feinkörnigen, gut schütt- und rieselfähigen und/oder fluidisierbaren Substanzen verwendet wird.

10. Verfahren nach Anspruch 1 und einem/oder mehreren der vorhergehenden Unteransprüche, dadurch gekennzeichnet, daß der Heizbehälter (9) zum Durchmischen des Wärmeträgers (10) und zur Erhöhung des Wärmeüberganges vorwärts und rückwärts geschwenkt und/oder gedreht wird.

11. Verfahren nach Anspruch 1 und einem/oder mehreren der vorhergehenden Unteransprüche, dadurch gekennzeichnet, daß zum Durchmischen des Wärmeträgers (10) ein Rüttler bzw. ein Vibrator (18) und/oder eine Förderschnecke verwendet wird.

12. Verfahren nach Anspruch 1 und einem/oder mehreren der vorhergehenden Unteransprüche, dadurch gekennzeichnet, daß der Wärmeträger (10) außerhalb des Heizbehälters (9) erwärmt und in einem genau temperierten Zustand in den Heizbehälter (9) gefüllt und nach der Wärmeabgabe an die Form (1) wieder aus dem Heizbehälter (9) entleert wird.

13. Verfahren nach Anspruch 1 und einem/oder mehreren der vorhergehenden Unteransprüche, dadurch gekennzeichnet, daß mit konstanter Temperatur und variabler Masse des Wärmeträgers (10) gearbeitet wird.

14. Verfahren nach Anspruch 1 und einem/oder mehreren der Unteransprüche 2 bis 12, dadurch gekennzeichnet, daß mit variabler Temperatur bei konstanter Masse des Wärmeträgers (10) gearbeitet wird.

15. Verfahren nach Anspruch 1 und einem/oder mehreren der vorhergehenden Unteransprüche, dadurch gekennzeichnet, daß der Wärmeträger (10) außerhalb des Heizbehälters (9) nach der Wirbelschichttechnik oder in einer separaten Drehstation oder Drehrohrofen bis auf eine genau definierte Temperatur erwärmt wird.

16. Verfahren nach Anspruch 1 und einem/oder mehreren der vorhergehenden Unteransprüche, dadurch gekennzeichnet, daß der Wärmeträger (10) innerhalb des Heizbehälters (9) erwärmt wird.

17. Verfahren nach Anspruch 1 und einem/oder mehreren der vorhergehenden Unteransprüche, dadurch gekennzeichnet, daß der Wärmeträger (10) innerhalb des Heizbehälters (9) mit Hilfe von elektrischem Strom (31) und/oder einem heißen Gas und/oder heißem Öl und/oder überhitztem Dampf erwärmt wird.

18. Verfahren nach Anspruch 1 und einem/oder mehreren der vorhergehenden Unteransprüche, dadurch gekennzeichnet, daß der Wärmeträger (10) zunächst außerhalb des Heizbehälters (9) erwärmt wird und zusätzlich innerhalb des Heizbehälters (9) erwärmt wird, um Wärmeverluste während des Anschmelzens und Ausschmelzens des Kunststoffpulvers (6) bei der Herstellung der Kunststoffhaut (2) auszugleichen.

19. Verfahren nach Anspruch 1 und einem/oder mehreren der vorhergehenden Unteransprüche, dadurch gekennzeichnet, daß ein Kunststoffpulver (6) enthaltender Pulverbehälter (23) mit seiner Öffnung (24) zur Innenseite (5) der Form (1) hin offen an dieser angeordnet wird, während sie mit dem den Wärmeträger (10) enthaltenden Heizbehälter (9) verbunden ist, und daß die Form (1) durch gemeinsames Verschwenken/Drehen mit den an ihr angeordneten Heiz- und Pulverbehältern (9, 23) im Bereich ihrer Innenseite (5) mit Kunststoffpulver (6) gefüllt wird.

20. Verfahren nach Anspruch 19, dadurch gekennzeichnet, daß die Form (1) und die mit ihr verbundenen Heiz- und Pulverbehälter (9, 23) gemeinsam gedreht und/oder verschwenkt werden, während Kunststoffpulver (6) auf der Innenseite (5) der Form (1) anschmilzt.

21. Verfahren nach Anspruch 19 oder 20, dadurch gekennzeichnet, daß der Pulverbehälter (23) von der Form (1) abgenommen wird, sobald die Schichtdicke der angeschmolzenen Kunststoffschicht (8) eine ausreichende Stärke erreicht hat und daß sodann die Kunststoffschicht (8) durch weiteres Verschwenken/Drehen zusammen mit dem Heizbehälter (9) aufgeschmolzen wird.

22. Verfahren nach Anspruch 21, dadurch gekennzeichnet, daß nach dem Lösen des Pulverbehälters (23) von der Form (1) weiterhin ein Wärmeübergang von dem Wärmeträger (10) auf die Form (1) erfolgt.

23. Verfahren nach Anspruch 22, dadurch gekennzeichnet, daß ein Wärmeübergang nach dem Lösen des Pulverbehälters (23) von der Form (1) unter Hin- und Herdrehen bzw. Schwenken des Heizbehälters (9) und der mit ihm verbundenen Form (1) erfolgt, bis die angeschmolzene Kunststoffschicht (8) vollständig ausgeschmolzen ist.

24. Vorrichtung zur Durchführung des Verfahrens nach Anspruch 1 und einem und/oder mehreren der vorhergehenden Verfahrensansprüche mit einer Form (1) und einem Heizbehälter (9), in dem ein Wärmeträger (10) angeordnet ist und wobei die Form (1) und der Heizbehälter (9) gemeinsam schwenk- bzw. drehbar gelagert sind, dadurch gekennzeichnet, daß der Heizbehälter (9) eine lichte Öffnung (11) aufweist, durch die die Form (1) in sein Inneres (13) mit einander zugeordneten Rändern (15, 16) derart einsetzbar und verbindbar ist, daß die Form (1) mit ihrer Außenseite (12) beim gemeinsamen Verschwenken bzw. Drehen durch Kontakt Wärme aufnimmt und daß der Wärmeträger (10) durchmischbar ist.

25. Vorrichtung nach Anspruch 24, dadurch gekennzeichnet, daß zusätzlich zum gemeinsamen Verschwenken bzw. Drehen ein Kunststoffpulver (6) enthaltender Pulverbehälter (23) mit der Form (1) verbindbar ist, wobei seine Öffnung (24) der Innenseite (5) der Form (1) zugewandt ist.

26. Vorrichtung nach Anspruch 24, dadurch gekennzeichnet, daß der Heizbehälter (9) derart dimensioniert ist, daß er bei ausreichender Füllung mit dem Wärmeträger (10) nur teilweise gefüllt ist.

27. Vorrichtung nach Anspruch 24, dadurch gekennzeichnet, daß der Heizbehälter (9) mit mindestens einer Einrichtung (18) versehen ist, mit deren Hilfe der Wärmeträger (10) durchmischbar ist.

28. Vorrichtung nach Anspruch 24 und einem/oder mehreren der vorhergehenden Vorrichtungsansprüche, dadurch gekennzeichnet, daß die Form (1) schalenförmig wie das herzustellende Teil ist, einen zum Verbinden mit dem Rand (16) des Heizbehälters (9) dienenden Rand (15) sowie eine gleichmäßige Wandstärke und gegebenenfalls einen/oder mehrere, hinterschnittene Bereiche (3) aufweist.

29. Vorrichtung nach Anspruch 25 und einem/oder mehreren der vorhergehenden Vorrichtungsansprüche, dadurch gekennzeichnet, daß der Pulverbehälter (23) einen Rand (27) aufweist, der ebenfalls dem Rand (15) der Form (1) zugeordnet ist.

30. Vorrichtung nach Anspruch 24 und einem/oder mehreren der vorhergehenden Vorrichtungsansprüche, dadurch gekennzeichnet, daß der Heizbehälter (9) eine Einrichtung (17) zum Druckausgleich zwischen seinem Inneren (13) und der Umgebungsluft aufweist.

31. Vorrichtung nach Anspruch 24 und einem/oder mehreren der vorhergehenden Vorrichtungsansprüche, dadurch gekennzeichnet, daß zwei Ventile als Einrichtung (17) zum Druckausgleich vorgesehen sind, wobei eines von innen nach außen und das andere von außen nach innen wirksam ist.

32. Vorrichtung nach Anspruch 24 und einem/oder mehreren der vorhergehenden Vorrichtungsansprüche, dadurch gekennzeichnet, daß als Einrichtung (18) zum Durchmischen des Wärmeträgers (10) ein Rüttler oder Vibrator bzw. eine Förderschnecke oder dergleichen vorgesehen ist.

33. Vorrichtung nach Anspruch 24 und einem/oder mehreren der vorhergehenden Vorrichtungsansprüche, dadurch gekennzeichnet, daß dem Heizbehälter (9) ein Antrieb zugeordnet ist, mit dessen Hilfe er vorwärts und rückwärts schwenkbar bzw. drehbar ist.

34. Vorrichtung nach Anspruch 24 und einem/oder mehreren der vorhergehenden Vorrichtungsansprüche, dadurch gekennzeichnet, daß der Wärmeträger (10) innerhalb des Heizbehälters (9) erwärmbar ist.

35. Vorrichtung nach Anspruch 24 und einem/oder mehreren der vorhergehenden Vorrichtungsansprüche, dadurch gekennzeichnet, daß der Wärmeträger (10) innerhalb des Heizbehälters (9) erwärmbar ist, wobei dies mit Hilfe von elektrischem Strom (31) und/oder mit Hilfe von heißem Gas und/oder heißem Öl und/oder überhitztem Dampf erfolgt.

36. Vorrichtung nach Anspruch 24 und einem/oder mehreren der vorhergehenden Vorrichtungsansprüche, dadurch gekennzeichnet, daß der Wärmeträger (10) außerhalb des Heizbehälters (9) und innerhalb des Heizbehälters (9) erwärmbar ist.

## Claims

1. A method of heating a mould (1) in particular for producing a plastics shell (2) from a plastics powder (6) which is introduced into the mould (1), caused to begin to melt therein in the form of a plastics layer (8) and subjected to complete melting, and is cooled for removal from the mould (1), wherein heating of the mould (1) is effected by contact with a heat carrier (10) from which heat is transmitted to the outside (12) of the mould (1) while the mould (1) is pivoted or turned together with the heat carrier (10) disposed in a heating container (9), characterised in that
a heating container (9) containing the heat carrier (10) and having a clear opening (11) is used,
the mould (1) is fitted for the transmission of heat through the opening (11) into the interior (13) of the heating container (9),
the mould (1) and the heating container (9) are sealingly connected together, wherein they have mutually associated edges (15, 16),
the mould (1) is fitted into the opening (11) in such a way that the mould (1) projects with its outside (12) into the interior (13) of the heating container (9), and
the heat carrier (10) is thoroughly mixed in the joint pivotal or turning movement.

2. A method according to claim 1 characterised in that the heating container (9) is only partially filled with the heat carrier (10).

3. A method according to claim 1 characterised in that a substance which is in fine-grain form, pourable or fluid and/or fluidisable is used as the heat carrier (10).

4. A method according to claim 1 and one or are of the preceding appendant claims characterised in that a fine-grain aluminium oxide is used as the heat carrier (10).

5. A method according to claim 1 and one or more of the preceding appendant claims characterised in that a fine-grain silicon oxide is used as the heat carrier (10).

6. A method according to claim 1 and one or more of the preceding appendant claims characterised in that silicate is used as the heat carrier (10).

7. A method according to claim 1 and one or more of the preceding appendant claims characterised in that a substance of a grain size of over 0.1 mm and preferably from 0.15 to 0.3 mm is used as the heat carrier (10).

8. A method according to claim 1 and one or more of the preceding appendant claims characterised in that a metal powder or a metal powder alloy or a metal oxide powder is used as the heat carrier (10).

9. A method according to claim 1 and one or more of the preceding appendant claims characterised in that a mixture of at least two different, fine-grain, well pourable and fluid and/or fluidisable substances are used as the heat carrier (10).

10. A method according to claim 1 and one or more of the preceding appendant claims characterised in that the heating container (9) is pivoted and/or turned forwardly and rearwardly for thoroughly mixing the heat carrier (10) and for enhancing the transmission of heat.

11. A method according to claim 1 and one or more of the preceding appendant claims characterised in that a shaker device or a vibrator (18) and/or a conveyor screw is used for thorough mixing of the heat carrier (10).

12. A method according to claim 1 and one or are of the preceding appendant claims characterised in that the heat carrier (10) is heated outside the heating container (9) and introduced in an accurately temperature-controlled condition into the heating container (9) and discharged again from the heating container (9) after the emission of heat to the mould (1).

13. A method according to claim 1 and one or more of the preceding appendant claims characterised in that operation is effected with a constant temperature and a variable mass of the heat carrier (10).

14. A method according to claim 1 and one or more of appendant claims 2 to 12 characterised in that operation is effected with a variable temperature at a constant mass of the heat carrier (10).

15. A method according to claim 1 and one or more of the preceding appendant claims characterised in that the heat carrier (10) is heated to an accurately defined temperature outside the heating container (9) using the fluidised bed procedure or in a separate rotary station or rotary cylindrical furnace.

16. A method according to claim 1 and one or more of the preceding appendant claims characterised in that the heat carrier (10) is heated within the heating container (9).

17. A method according to claim 1 and one or more of the preceding appendant claims characterised in that the heat carrier (10) is heated within the heating container (9) by means of electric current (31) and/or a hot gas and/or hot oil and/or superheated steam.

18. A method according to claim 1 and one or more of the preceding appendant claims characterised in that the heat carrier (10) is firstly heated outside the heating container (9) and additionally heated within the heating container (9) in order to compensate for heat losses during initial melting and full melting of the plastics powder (6) in the production of the plastics shell (2).

19. A method according to claim 1 and one or more of the preceding appendant claims characterised in that the powder container (23) containing plastics powder (6) is arranged on the mould (1) with its opening (24) open towards the inside (5) of the mould, while it is connected to the heating container (9) containing the heat carrier (10), and that the mould (1) is filled with plastics powder (6) in the region of its inside (5) by joint pivotal/turning movement with the heating and powder containers (9, 23) arranged on the mould.

20. A method according to claim 19 characterised in that the mould (1) and the heating and powder containers (9, 23) connected thereto are jointly turned and/or pivoted while plastics powder (6) begins to melt on the inside (5) of the mould (1).

21. A method according to claim 19 or claim 20 characterised in that the powder container (23) is removed from the mould (1) as soon as the thickness of the plastics layer (8) which has begun to melt has reached a sufficient magnitude and that then the plastics layer (8) is fully melted by further pivotal/turning movement together with the heating container (9).

22. A method according to claim 21 characterised in that after release of the powder container (23) from the mould (1) heat continues to be transmitted from the heat carrier (10) to the mould (1).

23. A method according to claim 22 characterised in that heat transmission is effected after release of the powder container (23) from the mould (1) with reciprocating or pivotal movement of the heating container (9) and the mould (1) connected thereto until the initially melted plastics layer (8) has been completely fully melted.

24. Apparatus for carrying out the method according to claim 1 and one or more of the preceding method claims comprising a mould (1) and a heating container (9) in which a heat carrier (10) is arranged and wherein the mould (1) and the heating container (9) are mounted for joint pivotal or turning movement, characterised in that the heating container (9) has a clear opening (11) through which the mould (1) can be fitted into its interior (13) with mutally associated edges (15, 16) and connected thereto in such a way that the mould (1) receives heat by contact with its outside (12) in the joint pivotal or turning movement and that the heat carrier (10) can be thoroughly mixed.

25. Apparatus according to claim 24 characterised in that in addition to the joint pivotal or turning movement a powder container (23) containing plastics powder (6) can be connected to the mould (1), its opening (24) being directed towards the interior (5) of the mould (1).

26. Apparatus according to claim 24 characterised in that the heating container (9) is so dimensioned that it is only partially filled when adequately filled with the heat carrier (10).

27. Apparatus according to claim 24 characterised in that the heating container (9) is provided with at least one device (18), by means of which the heat carrier (10) can be thoroughly mixed.

28. Apparatus according to claim 24 and one or more of the preceding apparatus claims characterised in that the mould (1) is of a shell-like configuration like the part to be produced, and has an edge (15) serving for connection to the edge (16) of the heating container (9) as well as a uniform wall thickness and possibly one or more regions (3) of an undercut configuration.

29. Apparatus according to claim 25 and one or more of the preceding apparatus claims characterised in that the powder container (23) has an edge (27) which is also associated with the edge (15) of the mould (1).

30. Apparatus according to claim 24 and one or more of the preceding apparatus claims characterised in that the heating container (9) has a device (17) for pressure equalisation between its interior (13) and the ambient air.

31. Apparatus according to claim 24 and one or more of the preceding apparatus claims characterised in that there are provided two valves as the device (17) for pressure equalisation, one of the valves being operative from the inside outwardly and the other being operative from the outside inwardly.

32. Apparatus according to claim 24 and one or more of the preceding apparatus claims characterised in that a shaker device or vibrator or a conveyor screw or the like is provided as the device (18) for mixing the heat carrier (10).

33. Apparatus according to claim 24 and one or more of the preceding apparatus claims characterised in that associated with the heating container (9) is a drive, by means of which it can be pivoted or turned forwardly and rearwardly.

34. Apparatus according to claim 24 and one or more of the preceding apparatus claims characterised in that the heat carrier (10) is heatable within the heating container (9).

35. Apparatus according to claim 24 and one or more of the preceding apparatus claims characterised in that the heat carrier (10) is heatable within the heating container (9), wherein same is effected by means of electric current (31) and/or by means of hot gas and/or hot oil and/or superheated steam.

36. Apparatus according to claim 24 and one or more of the preceding apparatus claims characterised in that the heating carrier (10) is heatable outside the heating container (9) and within the heating container (9).

## Revendications

1. Procédé pour le chauffage d'un moule (1), en particulier pour la fabrication d'une pellicule en matière plastique (2) à partir d'une poudre de matière plastique (6) qui est chargée dans le moule (1), qui commence et finit de fondre, en tant que pellicule de matière plastique (8) et est refroidie en vue de l'extraction hors du moule (1), le chauffage du moule (1) s'effectuant par contact avec un agent caloporteur (10), dont la chaleur est transférée à la face externe (12) du moule (1), pendant que le moule (1) est tourné respectivement pivoté ensemble avec l'agent caloporteur (10) se trouvant dans un récipient de chauffage (9), caractérisé en ce que :
un récipient de chauffage (9), contenant l'agent caloporteur (10), est utilisé avec une ouverture interne (11),
en ce que le moule (1) est inséré, par l'ouverture interne (11), à l'intérieur (13) du récipient de chauffage (9) pour le transfert de chaleur,
en ce que le moule (1) et le récipient de chauffage (9) sont reliés entre eux de manière étanche et présentent des bords (15, 16) tournés les uns vers les autres,
en ce que que l'insertion du moule (1) dans l'ouverture interne (11) est effectuée de manière que le moule (1) soit engagé, par sa face externe (12), à l'intérieur (13) du récipient chauffant (9) et
en ce que l'agent caloporteur (10) est mélangé par des mouvements de pivotement respectivement de rotation communs.

2. Procédé selon la revendication 1, caractérisé en ce que le récipient de chauffage (9) n'est rempli que partiellement par l'agent caloporteur (10).

3. Procédé selon la revendication 1, caractérisé en ce qu'il est utilisé, en tant qu'agent caloporteur (10), une substance à grains fins, fluidisable et/ou pouvant s'écouler respectivement se déverser.

4. Procédé selon la revendication 1 et l'une ou plusieurs des revendications précédentes, caractérisé en ce qu'il est utilisé, en tant qu'agent caloporteur (10), un oxyde d'aluminium à grains fins.

5. Procédé selon la revendication 1 et l'une ou plusieurs des revendications précédentes, caractérisé en ce qu'il est utilisé, en tant qu'agent caloporteur (10), un oxyde de silicium à grains fins.

6. Procédé selon la revendication 1 et l'une ou plusieurs des revendications précédentes, caractérisé en ce qu'il est utilisé, en tant qu'agent caloporteur (10), un silicate.

7. Procédé selon la revendication 1 et l'une ou plusieurs des revendications précédentes, caractérisé en ce qu'il est utilisé, en tant qu'agent caloporteur (10), une substance d'une grosseur de grain supérieure à 0,1 mm, de préférence de 0,15 à 0,3 mm.

8. Procédé selon la revendication 1 et l'une ou plusieurs des revendications précédentes, caractérisé en ce qu'il est utilisé, en tant qu'agent caloporteur (10), une poudre de métal ou un alliage de poudre de métal ou une poudre d'oxyde de métal.

9. Procédé selon la revendication 1 et l'une ou plusieurs des revendications précédentes, caractérisé en ce qu'il est utilisé, en tant qu'agent caloporteur (10), un mélange d'au moins deux substances différentes à grains fins, fluidisables et/ou présentant une bonne capacité d'écoulement respectivement de déversement.

10. Procédé selon la revendication 1 et l'une ou plusieurs des revendications précédentes, caractérisé en ce que le récipient de chauffage (9) est tourné et/ou pivoté vers l'avant et vers l'arrière pour le mélange de l'agent caloporteur (10) et pour augmenter le transfert de chaleur.

11. Procédé selon la revendication 1 et l'une ou plusieurs des revendications précédentes, caractérisé en ce que, pour le mélange de l'agent caloporteur (10), on utilise un secoueur respectivement un vibrateur (18) et/ou une vis sans fin de transport.

12. Procédé selon la revendication 1 et l'une ou plusieurs des revendications précédentes, caractérisé en ce que l'agent caloporteur (10) est chauffé à l'extérieur du récipient de chauffage (9) et est rempli dans le récipient de chauffage (9), dans un état tempéré exactement et est à nouveau vidé du récipient de chauffage (9), après la transmission de la chaleur au moule (1).

13. Procédé selon la revendication 1 et l'une ou plusieurs des revendications précédentes, caractérisé en ce qu'on travaille à température constante et masse variable de l'agent caloporteur (10).

14. Procédé selon la revendication 1 et l'une ou plusieurs des revendications 2 à 12, caractérisé en ce qu'on travaille à température variable et masse constante de l'agent caloporteur (10).

15. Procédé selon la revendication 1 et l'une ou plusieurs des revendications précédentes, caractérisé en ce que l'agent caloporteur (10) est chauffé à l'extérieur du récipient de chauffage (9) selon la technique de la couche fluidisée ou dans un poste rotatif séparé ou dans un four tubulaire rotatif à une température exactement définie.

16. Procédé selon la revendication 1 et l'une ou plusieurs des revendications précédentes, caractérisé en ce que l'agent caloporteur (10) est chauffé à l'intérieur du récipient de chauffage (9).

17. Procédé selon la revendication 1 et l'une ou plusieurs des revendications précédentes, caractérisé en ce que l'agent caloporteur (10) est chauffé à l'intérieur du récipient de chauffage (9), à l'aide du courant électrique (31) et/ou d'un gaz brûlant et/ou de l'huile brûlante et/ou de la vapeur surchauffée.

18. Procédé selon la revendication 1 et l'une ou plusieurs des revendications précédentes, caractérisé en ce que l'agent caloporteur (10) est chauffé tout d'abord à l'extérieur du récipient de chauffage (9) et est chauffé en plus à l'intérieur du récipient de chauffage (9) pour compenser les pertes de chaleur pendant le début et la fin de fusion de la poudre de matière plastique (6) au cours de la fabrication de la pellicule de matière plastique (2).

19. Procédé selon la revendication 1 et l'une ou plusieurs des revendications précédentes, caractérisé en ce qu'un récipient à poudre (23), contenant une poudre de matière plastique (6), est disposé, avec son ouverture (24), ouverte en direction de la face interne (5) du moule (1), et contre celle-ci, ouverture qui est reliée au récipient de chauffage (9), contenant l'agent caloporteur (10), et en ce que le moule (1) est rempli de poudre de matière plastique (6) dans la zone de sa face interne (5) par des mouvements de pivotement/rotation communs avec les récipients de chauffage et de poudre (9, 23), disposés sur le moule.

20. Procédé selon la revendication 19, caractérisé en ce que le moule (1) et les récipients à poudre (9, 23), qui sont reliés à lui, sont pivotés et/ou tournés en commun pendant que la poudre de matière plastique (6) commence à fondre sur la face interne (5) du moule (1).

21. Procédé selon la revendication 19 ou 20, caractérisé en ce que le récipient à poudre (23) est retiré du moule (1) dès que l'épaisseur de la couche de matière plastique (8) fondue a atteint une épaisseur suffisante et en ce qu'ensuite la couche de matière plastique (8) termine la fusion en pour-suivant la rotation/le pivotement ensemble avec le récipient de chauffage (9).

22. Procédé selon la revendication 21, caractérisé en ce qu'après la libération du récipient à poudre (23) du moule (1), un transfert de chaleur se poursuit entre l'agent caloporteur (10) et le moule (1).

23. Procédé selon la revendication 22, caractérisé en ce qu'après la libération du récipient à poudre (23) du moule (1), un transfert de chaleur se produit en tournant respectivement en pivotant en va-et-vient le récipient de chauffage (9) et le moule (1), relié à lui, jusqu'à ce que la couche de matière plastique (8) en cours de fusion, soit complètement fondue.

24. Dispositif pour la mise en oeuvre du procédé selon la revendication 1 et l'une ou plusieurs des revendications précédentes, comprenant un moule (1) et un récipient de chauffage (9), dans lequel est disposé un agent caloporteur (10), et le moule (1) et le récipient de chauffage (9) étant logés de manière à pivoter/tourner en commun, caractérisé en ce que le récipient de chauffage (9) présente une ouverture interne (11), à l'intérieur (13) de laquelle le moule (1) peut être inséré et relié par des bords tournés l'un vers l'autre (15, 16) et en ce que la face externe (12) du moule (1) absorbe la chaleur par contact lors du pivotement respectivement de la rotation commune et en ce que l'agent caloporteur (10) est mélangeable.

25. Dispositif selon la revendication 24, caractérisé en ce qu'en plus du pivotement respectivement de la rotation commun, un récipient à poudre (23), contenant une poudre de matière plastique (6), peut être relié au moule (1), et son ouverture (24) est tournée vers la face interne (5) du moule (1).

26. Dispositif selon la revendication 24, caractérisé en ce que le récipient de chauffage (9) est dimensionné de sorte qu'il n'est rempli que partiellement pour une charge suffisante de l'agent caloporteur (10).

27. Dispositif selon la revendication 24, caractérisé en ce que le récipient de chauffage (9) est muni d'au moins un dispositif (18) à l'aide duquel l'agent caloporteur (10) peut être mélangé.

28. Dispositif selon la revendication 24 et l'une ou plusieurs des revendications précédentes, caractérisé en ce que le moule (1) a une forme de coquille comme la pièce à fabriquer, présente un bord (15) servant à relier le bord (16) du récipient de chauffage (9) ainsi qu'une épaisseur uniforme de paroi et éventuellement une ou plusieurs zones (3) en contre-dépouille.

29. Dispositif selon la revendication 25 et l'une ou plusieurs des revendications précédentes du dispositif, caractérisé en ce que le récipient a poudre (23) présente un bord (27) qui est également associé au bord (15) du moule (1).

30. Dispositif selon la revendication 24 et l'une ou plusieurs des revendications précédentes du dispositif, caractérisé en ce que le récipient de chauffage (9) présente un dispositif (17) en vue de la compensation de pression entre son intérieur (13) et l'air ambiant.

31. Dispositif selon la revendication 24 et l'une ou plusieurs des revendications précédentes du dispositif, caractérisé en ce que deux soupapes sont prévues en tant que dispositif (17) pour la compensation de pression, l'une étant active de l'intérieur vers l'extérieur et l'autre de l'extérieur vers l'intérieur.

32. Dispositif selon la revendication 24 et l'une ou plusieurs des revendications précédentes du dispositif, caractérisé en ce qu'il est prévu, en tant que dispositif (18) pour le mélange de l'agent caloporteur (10), un secoueur ou vibrateur respectivement une vis sans fin de transport ou similaires.

33. Dispositif selon la revendication 24 et l'une ou plusieurs des revendications précédentes du dispositif, caractérisé en ce que le récipient de chauffage (9) est associé à un entraînement à l'aide duquel il peut être tourné respectivement pivoté vers l'avant et vers l'arrière.

34. Dispositif selon la revendication 24 et l'une ou plusieurs des revendications précédentes du dispositif, caractérisé en ce que l'agent caloporteur (10) peut être chauffé à l'intérieur du récipient de chauffage (9).

35. Dispositif selon la revendication 24 et l'une ou plusieurs des revendications précédentes du dispositif, caractérisé en ce que l'agent caloporteur (10) peut être chauffé à l'intérieur du récipient de chauffage (9), ceci s'effectuant à l'aide du courant électrique (31) et/ou d'un gaz brûlant et/ou de l'huile brillante et/ou de la vapeur surchauffée.

36. Dispositif selon la revendication 24 et l'une ou plusieurs des revendications précédentes du dispositif, caractérisé en ce que l'agent caloporteur (10) peut être chauffé à l'intérieur du récipient de chauffage (9) et à l'extérieur du récipient de chauffage (9).
